# EUROPÄISCHE PATENTSCHRIFT

(11) **EP 0 698 316 B1**
(45) Veröffentlichungstag und Bekanntmachung des Hinweises auf die Patenterteilung: **30.10.2002**
(21) Anmeldenummer: 95913011.3
(22) Anmeldetag: 08.03.1995
(51) Int. Cl.: H03M 13/00

(54) **Verfahren zum Übertragen von Bildern mit ungleichem Fehlerschutz**
Image transmission method with unequal error protection
Procédé de transmission d'images avec protection d'erreurs à niveaux inégaux

(30) Priorität: 11.03.1994 DE 4408163
(43) Veröffentlichungstag der Anmeldung: 28.02.1996
(73) Patentinhaber: ROBERT BOSCH GMBH, 70442 Stuttgart (DE)
(72) Erfinder: VOGT, Wilhelm, D-33165 Herbram (DE); LAPPE, Dirk, D-31174 Dinklar (DE); MANN PELZ, Rodolfo, D-30175 Hannover (DE); VOGT, Oliver, D-30455 Hannover (DE); NITSCHE, Gunnar, D-31139 Hildesheim (DE); MUNDT, Frieder, D-24539 Neumünster (DE)
(86) Internationale Anmeldenummer: DE9500320
(87) Internationale Veröffentlichungsnummer: WO95024770

(56) Entgegenhaltungen:
- EP-A- 0 156 440
- EP-A- 0 490 552
- EP-A- 0 570 214
- WO-A-87/06368
- DE-A- 4 229 654
- US-A- 4 119 945
- US-A- 5 214 656
- BEWEGLICHE FUNKDIENSTE. VORTRAGE DER NTG-FACHTAGUNG (MOBILE RADIO SERVICES. PROCEEDINGS OF NTG MEETING), MUNICH, WEST GERMANY, 25-27 NOV. 1985, ISSN 0341-0196, NTG-FACHBERICHTE, 1985, WEST GERMANY, Seiten 178-185, KITTEL L ET AL 'Verbundcodierung mit abgestuftem Fehlerschutz für digitale Funktelephonsysteme.'
- IEEE TRANSACTIONS ON SIGNAL PROCESSING, AUG. 1991, USA, Bd. 39, Nr. 8, ISSN 1053-587X, Seiten 1717-1731, COX R V ET AL 'Subband speech coding and matched convolutional channel coding for mobile radio channels'
- IEEE GLOBAL TELECOMMUNICATIONS CONFERENCE. GLOBECOM '91. COUNTDOWN TO THE NEW MILLENNIUM. FEATURING A MINI-THEME ON: PERSONAL COMMUNICATIONS SERVICES (PCS). CONFERENCE RECORD (CAT. NO.91CH2980-1), PHOENIX, AZ, USA, 2-5 DEC. 1991, ISBN 0-87942-697-7, 1991, NEW YORK, NY, USA, IEEE, USA, Seiten 40-46 vol.1, HOEHER P ET AL 'Performance of an RCPC-coded OFDM-based digital audio broadcasting (DAB) system'
- IEEE TRANSACTIONS ON COMMUNICATIONS, MARCH 1993, USA, Bd. 41, Nr. 3, ISSN 0090-6778, Seiten 454-459, WESTERINK P H ET AL 'Adaptive channel error protection of subband encoded images'
- NACHRICHTENTECHNIK ELEKTRONIK, JAN.-FEB. 1992, GERMANY, Bd. 42, Nr. 1, ISSN 0323-4657, Seiten 7-13, MANN PELZ R ET AL 'Picture and speech transmission over mobile speech channels'

## Beschreibung

### Stand der Technik

Die Erfindung geht aus von einem Verfahren zur Übertragung von Daten insbesondere von Bildern. Es ist schon ein Verfahren zur Übertragung von Bildern bei Biere, "Übertragung von Bewegt- und Standbildern in stark gestörten schmalbandigen Kanälen beim Funkbildtelefon", Bosch Technische Berichte, Heft 54, 1991, beschrieben, wobei die Bilddaten eines Bildes einer Quellcodierung unterzogen werden und die quellcodierten Bilddaten anschließend kanalcodiert werden und über einen Datenkanal übertragen werden. Die Quellcodierung erfolgt in Form einer Prädiktionsfehlercodierung und einer blockorientierten Bewegungsschätzung. Zur Kanalcodierung wird ein ratenkompatibler Faltungscode (RCPC) verwendet, wobei die entstehenden Datenströme mit einer Punktierung versehen werden und anschließend zu einem gemeinsamen Datenstrom verflochten werden.

Aus Nachrichtentechnik Elektronik, Jan-Feb. 1992, Bd. 42, Nr. 1, Seiten 7-13, Mann Pelz et al "Bild- und Sprachübertragung über Mobilfunkkanäle" ist es bekannt die Bilddaten in Klassen unterschiedlicher Empfindlichkeit zu unterteilen. Die Länge der Empfindlichkeitsklassen kann dabei von Datenrahmen zu Datenrahmen variieren. Die Information über die Empfindlichkeitsklassen muss sowohl für die Kanalkodierung und -decodierung als auch für die Quellcodierung zur Verfügung stehen. Selektiver Kanalschutz wird dort durch Punktierung in Verbindung mit Faltungskodierung erzielt.

Bei einem aus WO 93/11618 bekannten Verfahren werden Parameter übertragen, um eine Selektierung unter mehreren Coderaten zu erreichen. Der Empfänger merkt sich die dem Sender zugeführte Information über die Coderate.

### Vorteile der Erfindung

Das erfindungsgemäße Verfahren mit den Merkmalen des Anspruchs 1 ermöglicht es, verschiedenen Arten von Daten mit verschiedenen Coderaten zu kanalkodieren und zu übertragen.

Die Information über die Coderate und die Art der Klasse ist in vorteilhafter Weise in einem Informationswort abgelegt. Dadurch wird eine effiziente Aufteilung der zur Verfügung stehenden Datenrate ermöglicht.

Besonders vorteilhaft ist es, Informationen über die Art der Datenerzeugung selbst als Daten einer Klasse zu übertragen. Vorzugsweise werden Bilddaten, Audiodaten, Telefaxdaten und Daten in Form von Datenfiles übertragen.
Durch die Verwendung eines Interleavingverfahrens wird der Kanalfehlerschutz verbessert. Durch den Aufbau eines Datenrahmens mit einem Vielfachen an ganzzahligen Speicherplätzen, die in einer Diagonalen einer Speichermatrix zu finden sind, ist es möglich, beim Deinterleavingverfahren das Synchronwort schnell zu finden und eine genaue Synchronisation des Deinterleavers und des Datenrahmens vorzunehmen.

Von Vorteil ist es, in das Informationswort anstelle einer Codeinformation zusätzliche Daten einzutragen. Damit kann ein Datenaustausch von Kanalkoder zu Kanaldekoder erfolgen, ohne das Datenprotokoll ändern zu müssen. Ein Viterbidecoder, der nach dem Maximum Sequence Estimation Verfahren arbeitet eignet sich besonders zur Kanaldekodierung.

Die erfindungsgemäßen Verfahren zur Übertragung von Bilddaten mit den Merkmalen der Ansprüche 11, 12 und 13 haben demgegenüber den Vorteil, daß die quellcodierten Daten in Klassen eingeteilt werden, wobei die Klassen z.B. angeben, wie empfindlich die quellcodierten Bilddaten in bezug auf Übertragungsfehler sind. Die Klassen werden je nach Empfindlichkeit mit verschieden großem Fehlerschutz versehen, wobei die empfindlichen Bilddaten einen höheren Fehlerschutz erhalten als die weniger empfindlichen Bilddaten. Auf diese Weise wird die zur Verfügung stehende Datenrate effizienter ausgenutzt. Dadurch ist es möglich, eine bessere Bildqualität bei gleicher Datenrate zu erreichen. Die Einteilung der Bilddaten in Klassen und die Länge der Klassen und der verwendete Fehlerschutz wird mit Hilfe eines ersten Informationswortes übertragen, so daß diese zur Dekodierung notwendigen Daten mit übertragen werden und dem Dekoder zur Verfügung stehen. Vorzugsweise werden Daten über die Quellcodierung in Form von Codeworten mitübertragen. Zur Kennzeichnung der Länge der Codeworte, der Klasse der Codeworte und des Fehlerschutzes der Codeworte wird ein zweites Informationswort verwendet. Auf dies Weise stehen zusätzliche Informationen zur Quelldecodierung zur Verfügung. Dadurch wird die Qualität der quelldecodierten Bilddaten verbessert.

Durch die in den Unteransprüchen aufgeführten Maßnahmen sind vorteilhafte Weiterbildungen und Verbesserungen der in den Ansprüche 11 bis 13 beschriebenen Verfahren möglich. Besonders vorteilhaft ist es, zur Synchronisation ein Synchronisationswort zu verwenden, das aus zwei Williard-Code-Worten oder zwei Barker-Code-Worten zusammengesetzt ist. Das Synchronisationswort wird als Pseudo-Noise (PN) Synchronisationswort den Bilddaten in einem festgelegten Muster zugeefügt. Auf diese Weise ist eine einfache und genaue Synchronisation möglich, die ausreichend gegen Übertragungsfehler geschützt ist.

Eine vorzugsweise Einteilung des Informationswortes bzw. des ersten und zweiten Informationswortes besteht darin, eine Klassennummer, eine Codezahl und eine Längenzahl zu verwenden. Die Klassennummmer gibt die Klasse der dazugehörenden Codeworte bzw. die Klasse der dazugehörenden Bilddaten an. Die Codezahl beinhaltet die zur Kanalcodierung verwendete Coderate und die Längenzahl gibt die Anzahl der zu den Codeworten bzw. zu der Klasse gehörenden Bits an.

Dadurch, daß das erste und zweite Informationswort durch eine vorgegebene Anzahl von Null Bits abgeschlossen wird, ist der Viterbidecoder in einem bekannten Zustand. Das Informationswort bzw. das erste und zweite Informationswort kann anschließend durch Einschieben von Datenbits, die den Zustand des Viterbidecoders nicht ändern, ausgewertet werden, ohne weitere Datenbits auszuwerten. Anschließend werden unter Verwendung der im Informationswort bzw. im ersten und zweiten Informationswort enthaltenen Daten die folgenden Codeworte bzw. die folgenden Bilddaten decodiert.

Vorzugsweise werden die Codeworte aus einem ersten und einem zweiten Codewort gebildet, wobei das erste Codewort drei Bit lang ist und das erste Bit des ersten Codewortes angibt, ob die Bilddaten schnell oder langsam bei der Bildwiedergabe eaufgebaut werden. Das zweite Bit des ersten Codewortes zeigt an, welche von zwei möglichen Quellcodierverfahren angewendet wurden. Das dritte des ersten Codewortes gibt an, ob ein Informationswort bzw.ein erstes und zweites Informationswort verwendet wird. Das zweite Codewort ist vorzugsweise fünf Bit lang und beinhaltet die Stufengröße der bei der Quellcodierung verwendeten Quantisierung.

In vorteilhafter Weise wird ein drittes und ein viertes Codewort verwendet, wobei das dritte Codewort ein Bit lang ist und angibt, ob im folgenden vierten Codewort, das acht Bit lang ist, zusätzliche Informationen über die Art der Quellcodierung abgelegt sind. Auf diese Weise ist es möglich, zusätzliche Informationen über die Quellcodierung mittels des dritten und vierten Codewortes zu übertragen und für die Bildquelldecodierung zu verwenden.

Vorzugsweise werden die quellcodierten Bilddaten Kontur, Bewegungsvektor, Blockposition, DCT-Koeffizient, Quantisierungsstufe und Strukturindex in verschiedene Klassen eingeteilt. Auf diese Weise ist eine effiziente Bilddatenübertragung gewährleistet und es wird eine verbesserte Bildqualität bei gleicher Datenrate ermöglicht.

Die Flexibilität des beschriebenen Verfahrens wird erhöht, indem die Codezahl nicht belegte Codes aufweist und somit Codes für zukünftige Klassen zur Verfügung stehen. Auf diese Weise ist es bei zukünftigen Bildverarbeitungsverfahren mit neuen Klassen möglich, das Datenprotokoll zu verwenden, um neue Klassen zu verarbeiten, ohne Änderungen am Datenprotokoll vornehmen zu müssen. Dadurch ist das beschriebene Verfahren gut für Weiterentwicklungen geeignet.

Eine Verbesserung des Verfahrens wird erreicht, indem der Längenzeiger nicht nur zur Angabe der in einer Klasse enthaltenen Anzahl an Bilddatenbits verwendet wird, sondern auch als Anzeige verwendet wird, um dem Decoder anzuzeigen, ob alle Bilddatenbits einer Klasse in dieser Klasse enthalten sind oder, ob eine weitere Klasse mit einem weiteren ersten Informationswort folgt. Auf diese Weise wird die Verarbeitungsgeschwindigkeit des Decoders erhöht.

Eine vorzugsweise Ausbildung des Interleavers besteht darin, einen Faltungsinterleaver zu verwenden, der eine Speichermatrix mit einer festgelegten Breite und einer unendlichen Länge aufweist. Dabei werden die Bilddatenbits in Diagonalen von links oben nach rechts unten eingelesen, wobei die aufeinander folgenden Diagonalen jeweils um einen Speicherplatz horizontal gegeneinander versetzt sind. Zur Übertragung der Bilddaten werden die Bilddatenbits aus der Speichermatrix aus aufeinander folgenden Zeilen in der Reihenfolge ausgelesen, in der die Diagonalen gegeneinander beim Einlesen versetzt wurden. Auf diese Weise wird ein einfaches und schnelles Interleaving-Verfahren ermöglicht, das einen guten Schutz gegen Burstfehler im Datenkanal beinhaltet.

Besonders vorteilhaft ist es, die Anzahl der für ein Bild zu übertragenden Datenbits auf ein Vielfaches der in eine Diagonale in die Matrix einlesbaren Bits festzulegen, wobei die fehlenden Bilddatenbits durch Leerbits ersetzt werden. Auf diese Weise ist es möglich, die Bilddatenbits beim Einlesen in den Matrixspeicher des Deinterleavers so einzulesen, daß die Datenbits des Synchronwortes jeweils in einer bestimmten Spalte stehen und so in einem vorgegebenen Raster in der zweiten Speichermatrix des Deinterleavers stehen. Das Synchronwort wird mithilfe eines Korrelationsverfahrens aufgefunden. Dadurch ist es möglich alle Systemkomponenten des Empfängers mit einem Synchronwort zu synchronisieren.

Das erfindungsgemäße Verfahren mit den Merkmalen des Anspruchs 27 hat demgegenüber den Vorteil, daß ein erstes Informationswort nach einem festgelegten Aufbau, mit einer festgelegten Bitlänge und einer festgelegten Coderate decodiert wird. Anschließend werden die folgenden Bilddatenbits entsprechend der im ersten Informationswort abgelegten Information kanaldecodiert. Auf diese Weise ist eine schnelle und effiziente Kanaldecodierung möglich.

Durch die in den Unteransprüchen aufgeführten Maßnahmen sind vorteilhafte Weiterbildungen und Verbesserungen des im Anspruch 17 beschriebenen Verfahrens möglich.

Vorzugsweise wird ein zweites Informationswort mit einem festgelegten Aufbau, mit einer festgelegten Bitlänge und einer festgelegten Kanalcodierung kanaldecodiert und aus dem zweiten Informationswort Informationen über die Art der Klasse der folgenden Codeworte, die Art des Fehlerschutzes, d.h. die Coderate, und die Anzahl der zu den Codeworten gehörenden Datenbits ermittelt, um anschließend die dem zweiten Informationswort folgenden Codeworte unter Verwendung der im zweiten Informationswort abgelegten Daten zu kanaldecodieren, und anschließend die Informationen der Codeworte zur Bildquelldecodierung der Bilddatenbits zu verwenden.

In vorteilhafter Weise wird zur Durchführung des Deinterleaving-Verfahrens ein Faltungsdeinterleaver verwendet, der eine Speichermatrix aufweist, wobei die empfangenen Daten in Diagonalen von links unten nach rechts oben eingelesen werden, wobei aufeinander folgende Diagonalen um jeweils einen Speicherplatz gegeneinander in vertikaler Richtung versetzt sind und die Daten anschließend Zeile für Zeile ausgelesen werden, wobei die Zeilen gegeneinander in der gleichen Richtung und um einen Speicherplatz gegeneinander versetzt sind, wie die Diagonalen beim Einlesen der Daten. Auf diese Weise ist es möglich, ein schnelles und einfaches Deinterleaving-Verfahren durchzuführen, das gleichzeitig die zu übertragenden Daten gegen Burstfehler im Datenkanal ausreichend schützt.

Besonders vorteilhaft ist es, zur Kanaldecodierung einen Viterbi-Decoder, d.h. einen Maximum Likelihood Symbol Estimation Decoder zu verwenden, der nach dem Viterbi-Algorithmus arbeitet. Der Viterbi-Decoder weist eine festgelegte Gedächtnistiefe auf. Nach der Dekodierung des Informationswortes bzw. des ersten oder zweiten Informationswortes ist der Viterbidecoder in einem bekannten Zustand und es können mit einer Anzahl eingespeister Null oder Einsbits, das Informationswort bzw. das erste oder zweite Informationswort ausgewertet werden.
Anschließend werden die dem Informationswort oder dem ersten oder zweiten Informationswort folgenden Daten mit den in im Informationswort oder dem ersten bzw. dem zweiten Informationswort enthaltenen Informationen vom Viterbi-Decoder kanaldecodiert. Auf diese Weise ist ein effizientes Übertragungsverfahren möglich, wobei eine zeitliche Abstimmung zwischen Datenübertragung und Kanaldecodierung erfolgt, so daß die Daten des ersten und zweiten Informationswortes ermittelt sind, bevor die Bilddaten kanaldecodiert werden.

### Zeichnung

Ein Ausführungsbeispiel der Erfindung ist in der Zeichnung dargestellt und in der nachfolgenden Beschreibung näher erläutert. Es zeigen Figur 1 einen Sender und Empfänger, Figur 2 einen Datenrahmen eines Bildes, Figur 3 ein Synchronwort, Figur 4 ein Informationswort, Figur 5 Codeworte, Figur 6 eine Tabelle für coderaten, Figur 7 eine Tabelle für eine Klasseneinteilung, Figur 8 eine Faltungsinterleaver- und Faltungsdeinterleaver-Speichermatrix , Figur 9 einen schematischen Programmablauf und Figur 10 eine Klasseneinteilung für Makroblöcke.

### Beschreibung des Ausführungsbeispiels

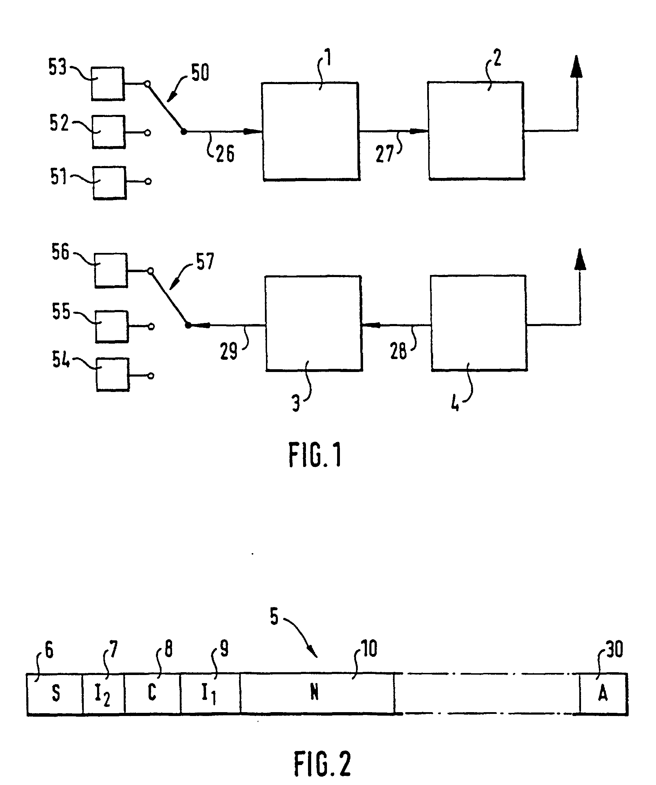

Figur 1 zeigt einen digitalen Signalprozessor 1, der über einen Datenbus 26 mit einem Multiplexer 50 verbunden ist. Der Multiplexer 50 ist mit einer Bilddatenquelle 51, einer Audioquelle 52 und einem Telefax 53 verbunden. Die Datenquellen führen dem ersten digitalen Signalprozessor 1 digitale Daten zu. Der digitale Signalprozessor 1 ist über eine Sendeleitung 27 mit einer Sendeeinheit 2 verbunden.

Zugleich zeigt Figur 1 eine Empfangseinheit 4, die über eine Empfangsleitung 28 mit einem zweiten digitalen Signalprozessor 3 verbunden ist. Der zweite digitale Signalprozessor 3 ist über einen zweiten Datenbus 29 und einen Demultiplexer 57 mit einer Bildsenke 54, einer Audiosenke 55 und einer Telefaxsenke 56 verbunden. Der zweite digitale Signalprozessor 3 gibt die empfangenen Daten an die entsprechenden Datensenken weiter.

Figur 2 zeigt einen Datenrahmen 5, der aus einer festgelegten Anzahl von Datenbits besteht. Der Datenrahmen 5 weist ein Synchronwort 6, ein zweites Informationswort 7, Codeworte 8, ein erstes Informationswort 9, Bilddatenbits 10 und Abschlußbits 11 auf. Ein Datenrahmen umfaßt jeweils die zur Übertragung eines Bildes notwendigen Daten. Im Allgemeinen besteht der Datenrahmen 5 aus mehreren ersten und zweiten Informationsworten 7,9 aus mehreren Codeworten 8 und mehrerern Klassen von Bilddatenbits 10. Der Einfachheit halber wurden in Figur 2 nicht alle Daten dargestellt. Für die Übertragung der Daten nach Anspruch 1 ist der Datenrahmen enprechend aufgebaut, wobei das Informationswort durch das erste bzw. zweite Informationswort dargestellt ist. Bei Anspruch 1 wird nicht zwischen erstem und zweitem Informationswort unterschieden.

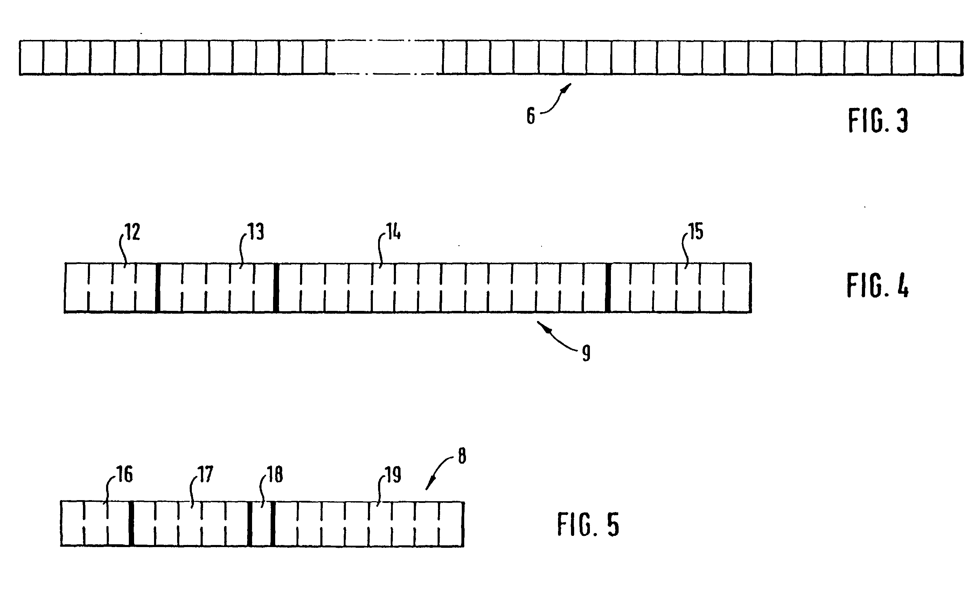

Figur 3 zeigt schematisch ein Synchronwort 6, das vierzig Bit lang ist und eine Pseudo-Noise Kombination aus zwei Williard-Worten darstellt. Ebenso könnte eine Pseudo-Noise Kombination aus zwei Barker-Worten gewählt werden. Da die bekannten Willard- und Barker Worte nur bis zu 33 Bit lang sind und die 33 Bit nicht immer ausreichen, um eine genaue und ausreichend gegen Fehler geschützte Synchronisation zu ermöglichen, wird eine Kombination aus Willard- oder Barker-Worten gewählt. Das Synchronwort 6 wird nach einem festgelegten Muster in den Datenrahmen 5 eingefügt, wobei an erster Stelle des Datenrahmens immer ein Bit eines Synchronwortes steht.

Figur 4 zeigt ein erstes oder zweites Informationswort 9,7, da das erste und zweite Informationswort 9, 7 gleich aufgebaut sind. Das erste oder zweite Informationswort 9,7 weist eine vier Bit lange Klassennummer 12, einen fünf Bit langen Codezeiger 13, eine vierzehn Bit lange Längenzahl 14 und sechs Nullbits 15 auf. Die Klassennummer 12 gibt an, welcher Klasse die folgenden Bilddaten 10 angehören. Der Codezeiger 13 enthält die Information, mit welchem Fehlerschutz die Bilddaten 10 kanalcodiert werden, d.h. welche Coderate die kanalcodierten Bilddaten 10 aufweisen. Die Längenzahl 14 gibt die Anzahl der Bilddatenbits 10 oder die Anzahl der zu den Codeworten 8 zählenden Datenbits an.

Die Anzahl der Nullbits 15, die jedes Informationswort abschließen, ist der Gedächtnistiefe des Kanalcoders angepaßt. Da der verwendete Kanalkoder eine Gedächtnistiefe von sechs Bit aufweist, werden sechs Nullbits 15 verwendet.

Figur 5 zeigt vier Codeworte 8, wobei ein erstes Codewort 16 drei Bit lang ist, ein zweites Codewort 17 fünf Bit lang ist, ein drittes Codewort 18 ein Bit lang ist und ein viertes Codewort 19 acht Bit lang ist. Das erste Bit des ersten Codewortes 16 gibt an, ob die Bilddaten bei der Bildwiedergabe schnell oder langsam dargestellt werden. Das zweite Bit des ersten Codewortes 16 zeigt an, welche von zwei möglichen Quellcodierverfahren angewendet wurden. Das dritte Bit des ersten Codewortes 16 zeigt an, ob Informationsworte verwendet werden oder nicht.

Das zweite Codewort 17 gibt die Stufengröße der bei der Bildquellcodierung verwendeten Quanitisierung an. Das dritte Codewort 18 zeigt an, ob im folgenden vierten Codewort 19 zusätzliche Informationen über die Bildquellcodierung abgelegt sind, die erst bei zukünftigen Entwicklungen verwendet werden.

Die Codeworte 8 werden dazu verwendet, um Informationen über die Bildquellcodierung mit den Bilddaten zu übertragen und diese Informationen bei der Bildquelldecodierung zu verwenden.

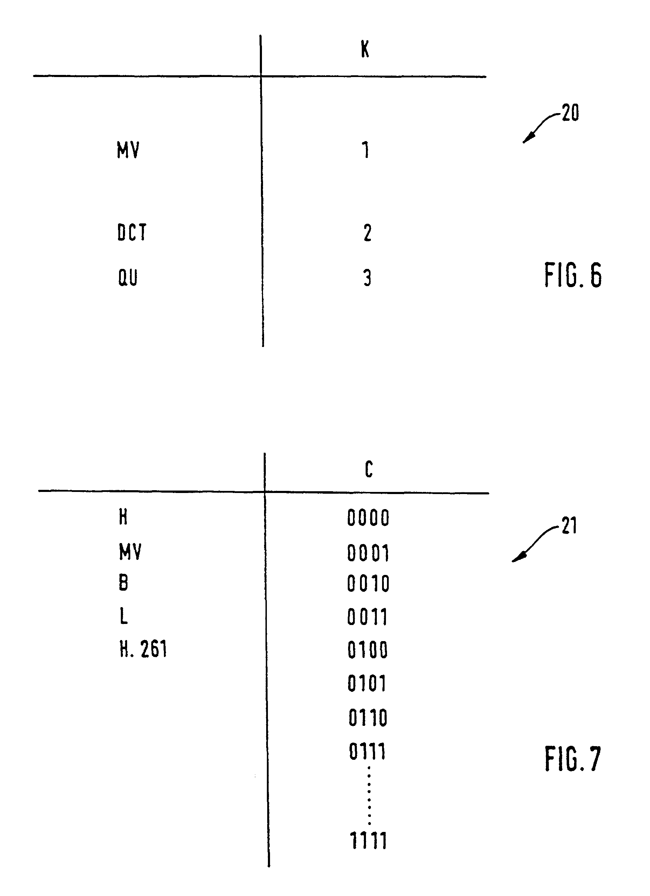

Figur 6 zeigt eine Klasseneinteilung der quellcodierten Bilddaten mit den entsprechenden Coderaten, die zur Kanalcodierung verwendet werden. Die 1. Klasse ist den Bewegungsvektoren MV zugeordnet . Die 2. Klasse ist den DCT-Koeffizienten (DCT) zugeordnet. Die dritte Klasse ist der Quantisierung (QU) zugeordnet. Die fünfte Klasse wird von den Positionsangaben (P) der Makroblöcke eingenommen.

Figur 7 zeigt eine Tabelle für den Codezeiger 13 des ersten oder zweiten Informationswortes 9, 7. Unter H sind Informationen über das Gesamtbild mit dem Code 0000, mit MV die Bewegungsvektoren durch den Code 0001, mit B die Makroblöcke durch den Code 0010, mit L Leerbits durch den Code 0011, das Verfahren nach H.261 mit dem Code 0100 dargestellt. Weiterhin zeigt Figur 7, nicht belegte Codes, die für zukünftige Klassen verwendet werden können.

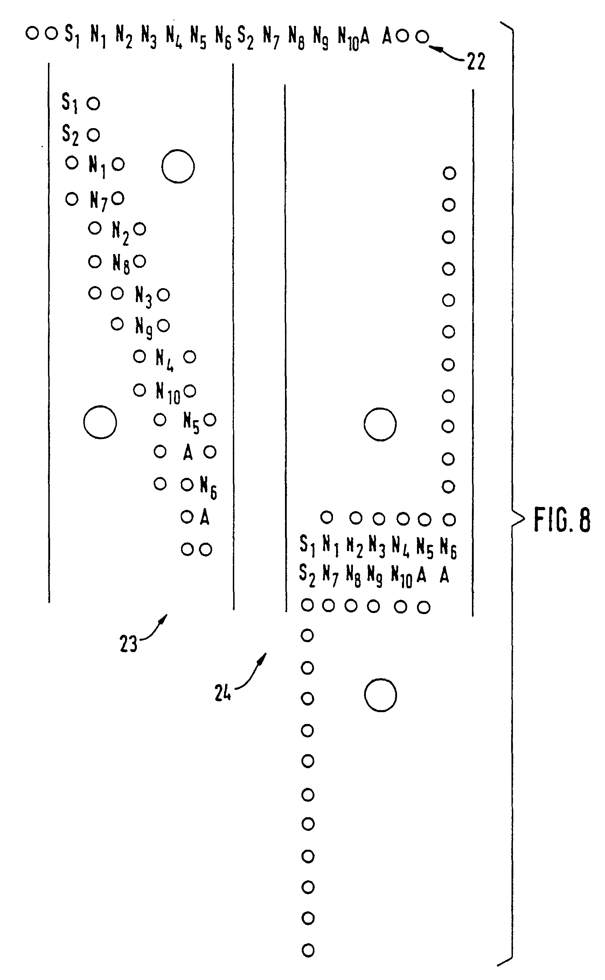

Figur 8 zeigt einen Datenstrom 22, der aus einer Abfolge von Synchronisationsbits S_{I}, Nutzbits N_{I} und Abschlußbits A besteht. Der Datenstrom stellt einen Teil eines Datenrahmens dar. Die Nutzbits werden z.B. durch das erste oder zweite Informationswort 9, 7, die Codeworte 8 oder die Bilddatenbits 10 dargestellt. Weiterhin ist eine erste Speichermatrix 23 eines Interleavers dargestellt. In die erste Speichermatrix 23 des Interleavers wird der Datenstrom 22 in Form von Diagonalen von links oben nach rechts unten eingelesen. Der Datenbitstrom 22 stellt die Datenbits dar, die zur Übertragung eines Bildes notwendig sind. Die Anzahl der Abschlußbits A ist so gewählt, daß beim Einlesen der Datenbits in die erste Speichermatrix 23 des Interleavers jeweils ganze Diagonalen mit den Daten eines Bildes aufgefüllt werden. Die Datenbits der ersten Speichermatrix 23 werden zeilenweise von oben nach unten wieder ausgelesen und über eine Sendeeinheit 2 über einen Datenkanal an eine Empfangseinheit 3 übertragen. Die Empfangseinheit 3 gibt die erhaltenen Daten an den zweiten Signalprozessor 3 weiter, der den empfangenen Datenstrom in eine zweite Speichermatrix 24 eines Deinterleavers entsprechend Figur 8 einliest. Figur 8 zeigt eine zweite Speichermatrix 24 eines Deinterleavers, in die die Daten der ersten Speichermatrix 23 des Interleavers in Diagonalen von links unten nach rechts oben eingeschrieben werden. Die Daten der zweiten Speichermatrix 24 werden zeilenweise von oben nach unten ausgelesen, so daß sich das ursprüngliche Datensignal 22 wieder ergibt und die Datenbits in der richtigen zeitlichen Reihenfolge wieder zur Verfügung stehen.

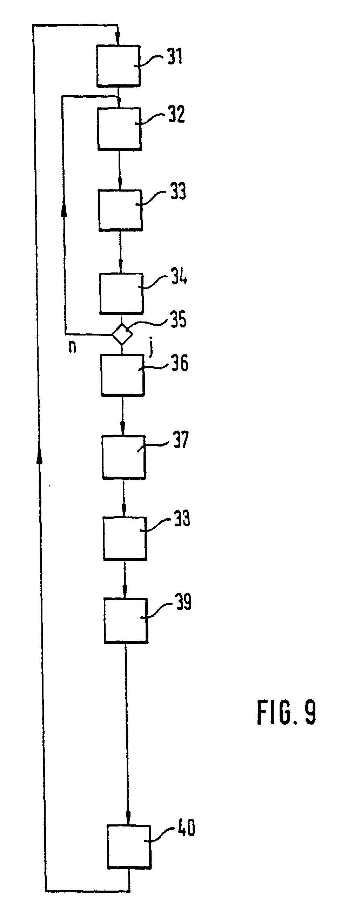

Figur 9 zeigt schematisch den Programmablauf des Verfahrens zum Übertragen von Bildern. Bei Programmpunkt 31 erfolgt die Einteilung eines Bildes in Makroblöcke. Das Bild liegt z.B. im CIF- oder QCIF-Format vor, wobei das CIF-Format 352 Pixel in einer Zeile und 288 Zeilen aufweist. Das QCIF-Format weist 176 Pixel in einer Zeile und 144 Zeilen auf. Ein Bild wird in 99 Makroblöcke eingeteilt, wobei jeder Makroblock aus vier Luminanzblöcken und zwei Chrominanzblöcken besteht. Die vier Luminanz- und die zwei Chrominanzblöcke weisen jeweils 64 Pixel (acht mal acht) auf.

Bei Programmpunkt 32 werden die Bilddaten des ersten Makroblockes, der links oben im Bild angeordnet ist, einer Quellcodierung unterzogen. Dabei werden die Makroblöcke einer blockweisen Bewegungsschätzung unterzogen, wobei Bewegungsvektoren MV in Bezug auf ein Vorgängerbild ermittelt werden. Die Bewegungsvektoren MV werden auf die Chrominanzblöcke analog übertragen. Eine diskrete Kosinustransformation wird entweder im intra Modus durchgeführt, d.h. der Makroblock wird im Originalblock diskret kosinustransformiert oder die diskrete Kosinustransformation wird im inter Modus ausgeführt, wobei die Differenz zwischen dem Originalbild und einem vorhergesagten Bild diskret kosinustransformiert wird. Dabei werden die Luminanz- und Chrominanzblöcke mit einer Größe von acht mal acht Pixel zweidimensional diskret kosinustransformiert und so DCT-Spektralkoeffizienten erhalten. Die DCT-Spektralkoeffizienten werden quantisiert und einer Zick-Zack-Lauflängencodierung unterzogen. Die diskrete Kosinustransformation wird als intradiskrete Kosinustransformation wie beschrieben durchgeführt. Ein anderes Verfahren besteht darin, ein interdiskrete Kosinustransformation durchzuführen,

Entsprechende Quellcodierverfahren sind bekannt und z.B. bei PTT Research Neher Laboratories The Netherlands, "Description Reference Model 8" (RM8), Paris, 1989 beschrieben.

Somit stehen als quellcodierte Bilddaten die Kontur, die Bewegungsvektoren MV, die Position der Luminanz- bzw. Chrominanzblöcke, die DCT-Spektralkoeffizienten und die Stufengröße der Quantisierung der Spektralkoeffizienten zur Verfügung, die übertragen werden müssen. Weitere quellcodierte Bilddaten sind z.B.eine Angabe über die Quantisierungsstufe der differentiellen Quantisierung (DQUANT). Dabei gibt ein zwei Bit langes Wort die Änderung der Quantisierung an. Eine weitere Information bildet die Angabe der Luminanzblöcke, die in einem Makroblock enthalten sind und codierte Transformationskoeffizienten enthalten (CBPY). Zudem wird die Information übertragen, welche Chrominanzblöcke eines Makroblockes codierte Transformationscoeffizienten enthalten und welcher Vorhersagemodus für das Bild oder den Makroblock verwendet wurde und welche Quantisierung für die Transformationskoeffizienten verwendet wird (CBPCM). Zudem gibt ein Codewort (COD) an, ob eine Codierung durchgeführt wird oder nicht.

Diese quellcodierten Bilddaten werden, wie in Figur 6 dargestellt, in Klassen eingeteilt. Die Klassen werden je nach Empfindlichkeit der quellcodierten Bilddaten in bezug auf Übertragungsfehler festgelegt sind. Den Klassen werden Coderaten zugewiesen, wobei die Coderaten nicht direkt mit den Klassen gekoppelt sind. Gleiche Klassen können auch verschiedene Coderaten aufweisen. Bilddaten, die besonders gegen Übertragungsfehler geschützt werden müssen, bekommen eine niedrige Coderate zugewiesen. Figur 6 zeigt eine zuordnung quellcodierter Bilddaten zu entsprechenden Klassen und Coderaten.
Die Klassen sind zur Information der Datensenken bzw. der Bildquellcoder gedacht.

Nach der Einteilung der quellcodierten Bilddaten in mehrere Klassen wird bei Programmpunkt 34 das erste Informationswort 9 für die zu übertragenden Klassen festgelegt. Die Klassenzahl 12 in Figur 4 zeigt die Klasse 1 an. Gehören nun zu der Klasse 1 24 Datenbits, so gibt der Längenzeiger 14, wie in Figur 4 dargestellt, in Form einer Binärzahl die Zahl 24 an. Die Anzahl der Nullbits 15 ist bei allen ersten und zweiten Informationsworten auf sechs Nullbits festgelegt. Überschrteitet die Anzahl der Datenbits, die zur Übertragung der quellcodierten Bilddaten einer Klasse notwendig sind, die Zahl 2¹⁴-1, so wird dem Längenzeiger der Wert 2¹⁴-1 zugeordnet und es wird ein weiteres erstes Informationswort gebildet, dem die fehlenden quellcodierten Bilddaten der vorhergehenden Klasse folgen. Damit weiß der Decoder, daß bei einem Längenzeiger mit dem Wert 2¹⁴-1 eine Ergänzung zur vorhergehenden Klasse folgt. Für die folgenden Klassen des quellcodierten Makroblockes wird analog vorgegangen und jeweils ein erstes Informationswort 9 erstellt.

Anschließend erfolgt bei Programmpunkt 35 die Abfrage, ob alle Makroblöcke des zu bearbeitenden Bildes quellcodiert sind. Ist dies nicht der Fall, so wird nach Programmpunkt 32 zurückgegangen und der folgende Makroblock quellcodiert. Die Makroblöcke werden nacheinander von links oben Zeile für Zeile nach rechts unten quellcodiert. Sind jedoch alle Makroblöcke des aktuellen Bildes quellcodiert, so wird nach Programmpunkt 36 verzweigt.

Bei Programmpunkt 36 werden die Codeworte 8, die Informationen über die Bildquellcodierung enthalten, erstellt. Wird eine schnelle Bilddarstellung vorgenommen, so ist das erste Bit des ersten Codewortes 16 eine Null. Bei der aktuellen Bildquellcodierung wurde ein erstes Quellcodierverfahren verwendet, so daß das zweite Bit des ersten Codewortes 16 ebenfalls eine Null annimmt. Das dritte Bit des ersten Codewortes 16 weist eine Eins auf, da Informationsworte verwendet werden. Das zweite Codewort 17 gibt die Stufengröße der Quantisierung an, so daß das zweite Codewort 17 als eine entsprechende binäre Zahl auszubilden ist. Das dritte Codewort 18 ist mit einer Null belegt, da im vierten Codewort 19 keine Zusatzinformationen über das Quellcodierverfahren abgelegt sind. Das vierte Codewort ist folglich mit acht Nullbits belegt. Figur 5 zeigt die gerade beschriebenen Codeworte 8.

Anschließend wird bei Programmpunkt 37 ein zweites Informationswort 7 gebildet, das entsprechend dem ersten Informationswort 9 aufgebaut ist und zur Kennzeichnung der Codeworte 8 verwendet wird. Dabei gibt das zweite Informationswort 7 die Klasse, die Coderate und die Anzahl der Datenbits der Codeworte 8 an und enthält sechs abschließende Nullbits 15. Dies wird wie beim ersten Informationswort mit einer Klassennummer 12, einem Codezeiger 13 und einer Längenzahl 14 angegeben. Daraufhin erstellt der digitale Signalprozessor 1 bei Programmpunkt 38 ein vierzig Bit langes Synchronwort, wie in Figur 3 dargetellt ist und fügt das Synchronwort 6 entsprechend einem vorgegebenen Muster in den Datenrahmen nach der Kanalkodierung ein. Dazu werden Kombinationen aus den bekannten Willard-Worten und den bekannten Barker-Worten verwendet.

Der digitale Signalprozessor 1 erstellt aus den Daten einen Datenrahmen, der aus einem Synchronwort 6, einem zweiten Informationswort 7, den Codeworten 8, einem ersten Informationswort 9 für die erste Klasse 1 und entsprechen ersten Informationsworten und quellcodierten Bilddaten für die weiteren Klassen des quellcodierten Bildes und einer festgelegten Anzahl an Abschlußbits 30 besteht. Die Anzahl der zu einem Bild gehörenden Datenbits wird mit Hilfe der Abschlußbits 30 auf ein Vielfaches einer vorgegebenen Anzahl festgelegt. Die vorgegebene Anzahl wird durch die Anzahl der in einer Diagonale in die Speichermatrix des Interleavers einschreibbaren Bilddaten festgelegt, so daß die Bilddaten eines Bildes jeweils eine ganze Anzahl an Diagonalen in der Speichermatrix des Interleavers auffüllen.

Bei Programmpunkt 39 führt der digitale Signalprozessor 1 eine Kanalcodierung der zur Übertragung eines Bildes notwendigen Bilddaten durch, wobei das zweite und das erste Informationswort mit höchstem Fehlerschutz kanalcodiert werden und die Codeworte 8 mit dem im zweiten Informationswort im Codezeiger abgelegten Fehlerschutz kanalcodiert werden und die quellcodierten Bilddaten mit dem Fehlerschutz kanalcodiert werden, der ihrer Klasse entspricht und in den ersten Informationsworten 9 im Codezeiger 13 abgelegt ist. Bei der Kanalkodierung wird vorzugsweise eine Faltungskodierung verwendet.

Die Faltungscodierung ist bekannt und ausführlich bei Clark, "Error Correction Coding for Digital Communications", Plenum Press, New York, 1981, ISBN 0-306-40615-2, S. 227 ff. beschrieben. Weitere Codierungsverfahren sind auf S. 267 ff. erläutert.

Anschließend werden bei Programmpunkt 40 die kanalcodierten Daten eines Bildes an die Sendeeinheit 2 weitergegeben und die Sendeeinheit 2 überträgt die kanalcodierten Bilddaten mit Hilfe einer Frequenzmodulation oder GSFK-Modulation. Nach Programmpunkt 40 wird zu Programmpunkt 31 zurückverzweigt und das nächste Bild verarbeitet.
Kommt es bei der Kanalkodierung zu Verzögerungen, so daß kein Bilddatum zur Übertragung zur Verfügung steht, aber trotzdem ein Datum übertragen werden muß, so wird vom ersten digitalen Signalprozessor 2 ein Nullbit eingefügt und dieses übertragen.

Will man einen Schutz gegen Burstfehler im Datenkanal einbauen, so wird ein Interleaver bei der oben beschriebenen Kanalkodierung verwendet. Dabei führt der digitale Signalprozessor 1 bei Programmpunkt 39 den in Figur 8 dargestellten Datenstrom einer ersten Speichermatrix 23 eines Interleavers zu, wobei der Datenstrom 22 in Diagonalen von links oben nach rechts unten einlesen wird und die Diagonalen jeweils um ein Speicherfeld gegeneinander nach unten versetzt sind. Anschließend liest die digitale Signalprozessor 1 die Datenbits aus der ersten Speichermatrix 23 zeilenweise aus und gibt diese an die Sendeeinheit 2 weiter.

Anstelle der in Figur 9 beschriebenen Einteilung der quellcodierten Bilddaten des Makroblockes in mehrere Klassen, kann es vorteilhaft sein, die quellcodierten Bilddaten eines einzigen oder weniger Makroblöcke in eine Klasse einzuteilen und jede Klasse mit einem ersten Informationswort zu versehen.
Dadurch wird die Codierverzögerung verringeert, wobei jedoch nicht eine genau abgestufte Einteilung der Klassen erfolgt und dadurch die Datenrate unter Umständen nicht so effizient ausgenutzt wird.

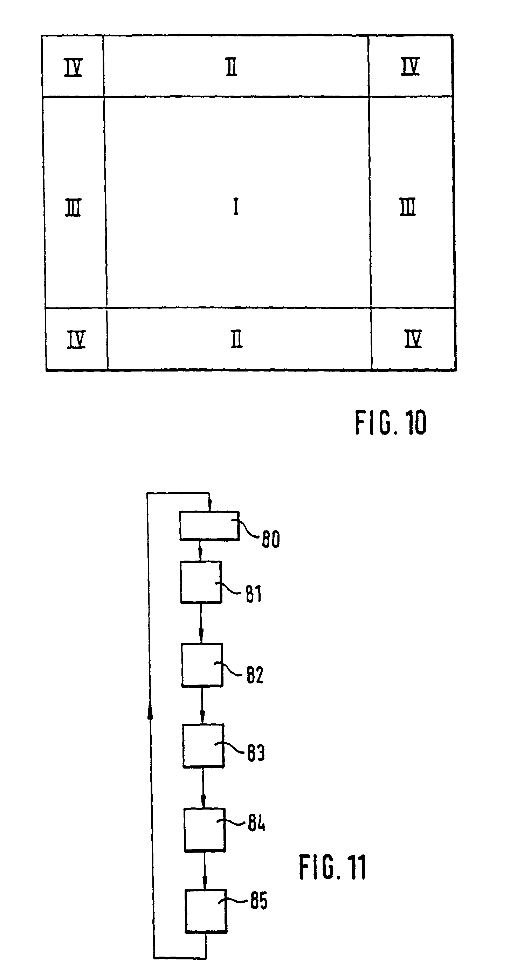

Figur 10 zeigt eine Einteilung eines Bildes in Bereiche verschiedener Klassen, wobei in die Bereiche die Klassen eingezeichnet sind und die Klassen mit einer kleinen Zahl einem großen Fehlerschutz entsprechen. Die Makroblöcke, die in den Randbereichen angeordnet sind, werden mit einem geringeren Fehlerschutz übertragen, da diese Bereiche des Bildes für das subjektive Empfinden der Bildqualität von untergeordneter Rolle sind. Die zentralen Bereiche des Bildes jedoch sind den Klassen mit großem Fehlerschutz zugeordnet, da in diesen Bereichen eine schlechte Bildqualität sofort ins Auge fällt.

Eine besondere Vereinfachung des in Figur 9 dargestellten Verfahrens besteht darin, die quellcodierten Bilddaten eines Bildes in Klassen einzuteilen und diese Klassen mit jeweils einem ersten Informationswort zu versehen. Auf dies Weise werden die Bilddaten zu größeren Klassen zusammengefaßt, was ein besonders einfaches, aber nicht so genaues Verfahren darstellt.

Figur 11 zeigt schematisch den Programmablauf zum Empfangen und Decodieren von kanalcodierten und quellcodierten Bilddaten. Bei Programmpunkt 80 werden die Bilddaten von einer Empfangseinheit 4 empfangen, frequenzdemoduliert und dem zweiten digitalen Signalprozessor 3 zugeführt. Der zweite digitale Signalprozessor 3 unterzieht die digitalen Bilddaten einem Faltungsdeinterleavingverfahren, wie in Figur 8 dargestellt ist.
Interleaving- und Deinterleavingverfahren sind bekannt und unter anderem z.B. bei Clark, " Error Correction Coding for Digital Communications", Plenum Press, New York, 1981, ISBN 0-306-40615-2, S. 345 ff. beschrieben.

Die digitalen Bilddaten werden in Diagonalen von links unten nach rechts oben in einen ersten Matrixspeicher 24 eingelesen. Der zweite digitale Signalprozessor 3 weiß, daß die Bits des Synchronwortes in einer bestimmten Spalte der zweiten Speichermatrix 24 in festgelegten Abständen, d.h. Spreizung, zu finden sind. Die zeitliche Spreizung der Bits des Synchronwortes vermindert die Empfindlichkeit der Synchronisation gegenüber Burstfehler im Datenkanal. Über einen Kreuzkorrelationsvergleich mit einer idealen Synchronisationsbitfolge ermittelt der zweite digitale Signalprozessor 3 das Synchronwort und entscheidet aufgrund einer Fehlerschwelle, ob das Synchronwort erkannt wurde. Kreuzkorrelationsverfahren sind bekannt und z.b. bei Proakis," Digital Communications ", McGraw-Hill, New York, 1989, S. 141 ff. beschrieben.

Die im Deinterleaver auftretende Zeitverzögerung wird vom zweiten digitalen Signalprozessor 3 benutzt, um eine Synchronisation durchzuführen. Das erste Bit des Synchronwortes gibt den Beginn eines Datenrahmens für die Daten eines gesamten Bildes an. Anschließend werden die Bilddaten zeilenweise aus dem zweiten Matrixspeicher 24 ausgelesen, wobei mit dem ersten Bit des Synchronisationswortes begonnen wird. Dem zweiten digitalen Signalprozessor 3 ist bekannt, daß nach dem ersten Bit des Synchronisationswortes ein erstes oder zweites Informationswort 9,7 folgt, wobei das erste oder zweite Informationswort 9,7 eine vorgegebene Anzahl an Datenbits aufweist und mit einer vorgegebenen Coderate kanalcodiert ist. Der zweite digitale Signalprozessor 3 führt eine Kanaldecodierung nach dem Viterbi-Algorithmus (Maximum Likelihood Sequence Estimation) des ersten bzw. zweiten Informationswortes 9,7 durch und ermittelt aus den Daten, die im ersten oder zweiten Informationswort abgelegt sind, wieviele Datenbits die folgenden Codeworte bzw. die folgenden Bilddaten aufweisen und mit welcher Coderate die Codeworte bzw. die Bilddatenbits zu kanaldecodieren sind.

Das Maximum Likelihood Sequence Estimation Verfahren ist bekannt und bei Clark, " Error Correction Coding for Digital Communications", Plenum Press, New York, 1981, ISBN 0-306-40615-2, S. 231 ff. und bei Proakis," Digital Communications ", McGraw-Hill, New York, 1989, S. 394 ff. beschrieben.

Bei Programmpunkt 82 führt der zweite digitale Signalprozessor 3 eine Kanaldecodierung der Codeworte 8 nach dem Viterbi-Algorithmus durch. Die in den Codeworten 8 abgelegten Daten werden vom zweiten digitalen Signalprozessor 3 gespeichert. Anschließend wird das erste Informationswort 9 entsprechend der festgelegten Coderate vom zweiten digitalen Signalprozessor 3 unter Verwendung des Viteri-Algorithmus kanaldecodiert. Aus den Daten, die im ersten Informationswort 9 abgelegt sind, erfährt der zweite digitale Signalprozessor 3, wieviele Datenbits die folgenden Bilddaten aufweisen und mit welcher Coderate die folgenden Bitdaten kanalcodiert wurden. Daraufhin führt der zweite digitale Signalprozessor 3 unter Verwendung der im ersten Informationswort 9 abgelegten Coderate eine Kanaldecodierung nach dem Viterbi-Algorithmus der folgenden Bilddatenbits durch. Daraufhin wird ein weiteres erstes Informationswort und weitere Bilddatenbits vom zweiten digitalen Signalprozessor 3 nach dem Viterbi-Algorithmus kanaldecodiert, bis alle zu einem Bild gehörenden Bilddatenbits kanaldecodiert worden sind.

Bei Programmpunkt 83 werden die Bilddatenbits eines Bildes einer Bildquelldecodierung vom zweiten digitalen Signalprozessor 3 unterzogen und die kanaldecodierten und quelldecodierten Bilddaten werden anschließend vom zweiten digitalen Signalprozessor 3 an einen zweiten Datenbus 29 weitergegeben. Entsprechende Bildquelldecodierverfahren ergeben sich analog aus den quellcodierten Bilddaten.

Bei der Bildquelldecodierung werden vom zweiten digitalen Signalprozessor 3 die in den Codeworten 8 abgelegen Informationen verwendet. Bei besonders einfachen Verfahren werden keine Codeworte 8 verwendet, so daß der zweite Signalprozessor 3 aus den ersten Informationsworten 9 und den quellcodierten Bilddaten 10 die quelldecodierten Bilddaten und damit das Bild ermittelt.

Anschließend werden die quelldecodierten Bilddaten über den zweiten Datenbus 29 an eine Bildwiedergabeeinheit gegeben und die Bildwiedergabeeinheit stellt das Bild dar.
Daraufhin werden vom zweiten digitalen Signalprozessor 3 die Daten eines weiteren Bildes bearbeitet.

Weiterhin ist es bei technisch einfachen Verfahren mit geringer Bildqualität, bei denen kein Interleaving-Verfahren auf der Senderseite verwendet wurde, nicht notwendig ein Deinterleaving-Verfahren auf der Empfängerseite durchzuführen.

Die beschriebenen Verfahren werden beispielsweise zur Bildübertragung bei Mobilfunktelefonen eingesetzt. Als Übertragungskanal dient z.B. das europäische digitale schnurlose Telefonnetz (DECT).

## Patentansprüche

1. Verfahren zum Übertragen von Daten, wobei die Daten von mindestens einer Datenquelle (51, 52, 53) erzeugt werden und in einem Datenrahmen (5) an einen Kanalkoder geführt werden und die Daten einer Kanalkodierung unterzogen werden, wobei die Daten in Klassen unterschiedlicher Empfindlichkeit in Bezug auf ihre Rekonstruktion bei einer fehlerhaften Übertragung eingeteilt werden, wobei für jede Klasse ein Informationswort (7, 9) festgelegter Länge erstellt wird, wobei das Informationswort Angaben über die Art der Klasse, die Anzahl der zur Klasse gehörenden Datenbits und die Coderate, mit der die Klasse zu codieren ist, aufweist, wobei zuerst die Coderate aus dem Informationswort (7, 9) vom Kanalkoder ausgelesen wird und mit der Coderate die zum Informationswort gehörende Klasse an Daten kanalkodiert wird und wobei das Informationswort mit einer festgelegten Coderate kanalkodiert wird.

2. Verfahren nach Anspruch 1, **dadurch gekennzeichnet, daß** Informationen über die Datenerzeugung und/oder Datenquellcodierung als Daten einer Klasse im Datenrahmen (5) abgelegt werden.

3. Verfahren nach Anspruch 1 oder 2, **dadurch gekennzeichnet, daß** als verschiedene Klassen Bilddaten und/oder Audiodaten und/oder Telefaxdaten und/oder Datenfiles verwendet werden.

4. Verfahren nach einem der Ansprüche 1 bis 3, **dadurch gekennzeichnet, daß** die Daten nach der Kanalkodierung (40) einem Interleavingverfahren unterzogen werden, wobei die Daten in Diagonalen einer ersten Speichermatrix (23) eingelesen werden und anschließend zeilenweise ausgelesen werden.

5. Verfahren nach Anspruch 4, **dadurch gekennzeichnet, daß** der Datenrahmen eine festgelegte Anzahl an Datenbits aufweist, die den Speicherplätzen einer ganzzahligen Anzahl an Diagonalen der ersten Speichermatrix (23) entsprechen.

6. Verfahren nach einem der Ansprüche 1 bis 5, **dadurch gekennzeichnet, daß** eine Synchronisation der Datenübertragung mit einer Pseudo-Noise Sequenz mit guten Autokorrelationseigenschaften durchgeführt wird.

7. Verfahren nach einem der Ansprüche 1 bis 6, **dadurch gekennzeichnet, daß** bei mehreren in einem Datenrahmen (5) vorgesehenen Informationsworten (7, 9) wenigstens eines dieser Informationsworte als Codeinformation keine Coderate, sondern zusätzliche Daten enthält.

8. Verfahren zum Übertragen von Daten nach einem der Ansprüche 1 bis 6, **dadurch gekennzeichnet, daß** das Informationswort (7, 9) in einem Empfänger erhalten und dekodiert wird, daß aus dem Informationswort die Coderate und die Anzahl der Datenbits der zum Informationswort gehörenden Klasse ermittelt werden, daß anschließend die Klasse mit der im Informationswort abgelegten Coderate kanaldekodiert wird.

9. Verfahren nach Anspruch 8, **dadurch gekennzeichnet, daß** als Kanaldecoder ein Viterbidecoder verwendet wird, der nach dem Maximum-Likelihood-Sequence-Estimation Verfahren arbeitet.

10. Verfahren nach Anspruch 8 oder 9, **dadurch gekennzeichnet, daß** der Viterbidecoder nach dem Einlesen des letzten Datenbits des Informationswortes in einem bekannten Zustand ist, daß vom Viterbidecoder das eingelesen Informationswort ausgewertet wird, ohne weitere Datenbits des Datenrahmens einzulesen, indem Bits eingelesen werden, die den Zustand des Viterbidecoders nicht ändern.

11. Verfahren nach einem der Ansprüche 1 bis 7, **dadurch gekennzeichnet, daß** als Daten Bilder verwendet werden, die jeweils in Makroblöcke eingeteilt sind, daß jeder Makroblock der Quellcodierung unterzogen wird, daß die quellcodierten Bilddaten eines Makroblockes in eine von mehreren Klassen eingeteilt werden, daß sich die Klassen durch unterschiedliche Empfindlichkeit in bezug auf die Rekonstruktion des Makroblockes mit bei der Übertragung auftretenden Fehlern in den Bilddaten unterscheiden, daß die Bilddaten des Makroblockes mit jeweils einem ersten Informationswort (9) versehen werden, daß das erste Informationswort (9) nach einem festgelegten Aufbau Daten über die Klasse, die Kanalkodierung und die Anzahl der zum Makroblock gehörenden Bilddaten (10) enthält, daß zusätzlich eine festgelegte Anzahl an Codeworten (8) vor der Kanalkodierung den Bilddaten eines Bildes zugefügt wird, daß die Codeworte (8) Informationen über die Art der Quellcodierung enthalten, daß die Codeworte mit einem zweiten Informationswort (7) versehen werden, daß das zweite Informationswort (7) nach einem festgelegten Schema aufgebaut ist und Daten über die Klasse der Codeworte (8), über die Art der Kanalkodierung und die Anzahl der zu den Codeworten (8) gehörenden Datenbits aufweist, daß das erste Informationswort (9) und das zweite Informationswort (7) mit vorgegebenen Kanalkodierungen übertragen werden, daß die Codeworte (8) und die Bilddaten (10) jedes Makroblockes mit einer ihrer Klasse entsprechenden vorgebenen Kanalkodierung übertragen werden, und daß ein Synchronisationswort (6) den kanalkodierten Datenbits eines Bildes zugefügt wird.

12. Verfahren nach einem der Ansprüche 1 bis 7, **dadurch gekennzeichnet, daß** als Daten quellcodierte Bilddaten (10) eines Bildes verwendet werden, die in Klassen unterschiedlicher Empfindlichkeit in bezug auf die Rekonstruktion des Bildes mit bei der Übertragung der Bilddaten (10) auftretenden Fehlern eingeteilt werden, daß jeder Klasse ein erstes Informationswort (9) zugefügt wird, daß das erste Informationswort (9) nach einem vorgegebenen Schema aufgebaut ist und Daten über die Art der Klasse, die Kanalkodierung und die Anzahl der Bits der dazugehörenden Bilddaten (10) enthält, daß die ersten Informationsworte (9) mit festgelegten Kanalkodierungen und die Bilddaten (10) entsprechend ihren Klassen mit vorgegebenen Kanalkodierungen übertragen werden, wobei den kanalkodierten Bilddaten (10) und ersten Informationsworten (9) eines Bildes ein Synchronisationswort (6) zugefügt wird.

13. Verfahren nach einem der Ansprüche 1 bis 7, **dadurch gekennzeichnet, daß** als Daten Bilder verwendet werden, die jeweils in Makroblöcke eingeteilt werden, daß jeder Makroblock der Quellcodierung unterzogen wird, daß die quellcodierten Bilddaten jedes Makroblockes in eine Klasse eingeteilt werden, wobei die Klassen unterschiedliche Empfindlichkeiten in bezug auf die Rekonstruktion des Makroblockes mit bei der Übertragung der Bilddaten (10) auftretenden Fehlern darstellen, daß die Bilddaten (10) der Klassen mit jeweils einem ersten Informationswort (9) versehen werden, daß das erste Informationswort (9) nach einem vorgegenen Schema aufgebaut ist und Daten über die Klasse, die Kanalkodierung und die Anzahl der zur Klasse gehörenden Bilddaten (10) enthält, daß eine festgelegte Anzahl an Codeworten (8) vor der Kanalkodierung den Daten eines Bildes zugefügt wird, daß die Codeworte (8) Informationen über die Art der Quellcodierung enthalten, daß die Codeworte mit einem zweiten Informationswort (7) versehen werden, daß das zweite Informationswort (7) nach einem festgelegten Schema aufgebaut ist und Daten über die Klasse der Codeworte (8), über die Art der Kanalkodierung und die Anzahl der zu den Codeworten (8) gehörenden Datenbits aufweist, daß das erste Informationswort (9) und das zweite Informationswort (7) vorgegebenen Kanalkodierungen unterzogen werden, daß die Codeworte (8) und die Bilddaten der Klassen mit einer ihren Klassen entsprechenden vorgebenen Kanalkodierungen unterzogen werden, und daß den kanalkodierten Daten daß den Daten eines Bildes vor der Übertragung ein Synchronisationswort (6) zugefügt wird.

14. Verfahren nach Anspruch 11 und 13, **dadurch gekennzeichnet, daß** ein Makroblock nach dem anderen übertragen wird.

15. Verfahren nach einem der Ansprüche 11 bis 14, **dadurch gekennzeichnet, daß** als Synchronisationswort (6) ein Pseudo-Noise Datenwort verwendet wird, das aus zwei Willard-Code-Worten oder zwei Barker-Code-Worten zusammensetzt ist.

16. Verfahren nach einem der Ansprüche 1 bis 7 oder 11 bis 15, **dadurch gekennzeichnet, daß** das erste und das zweite Informationswort (9,7) eine erste vier Bit lange Klassennummer (12), einen fünf Bit langen Codezeiger (13) und eine vierzehn Bit lange Längenzahl (14) aufweist, daß die Klassennummer (12) die Klasse der dazugehörenden Codeworte (8) bzw. die Klasse der dazugehörenden Bilddaten (10), der Codezeiger (13) die zur Kanalkodierung verwendeten Coderate und die Längenzahl (14) die Anzahl der zu den Codeworten (8) bzw. zu den Klassen gehörenden Datenbits angibt.

17. Verfahren nach einem der Ansprüche 1 bis 7 oder 11 bis 16, **dadurch gekennzeichnet, daß** das Informationswort oder das erste und zweite Informationswort (9,7) mit einer festgelegten Anzahl an Nullbits (15) oder Einsbits abgeschlossen wird, daß die festgelegte Anzahl der Gedächtnistiefe des verwendeten Kanalkoders entspricht.

18. Verfahren nach einem der Ansprüche 11 oder 13, **dadurch gekennzeichnet, daß** die Codeworte (8) aus einem ersten und einem zweiten Codewort (16,17) gebildet werden, daß das erste Codewort (16) drei Bit lang ist und das erste Bit angibt, ob die Bilddaten schnell oder langsam aufgebaut werden sollen, daß das zweite Bit des ersten Codewortes (16) angibt, ob eine von zwei wählbaren Quellcodierverfahren verwendet wurde, daß das dritte Bit des ersten Codewortes (16) für die Informationen verwendet wird, ob Informationsworte verwendet werden oder nicht, daß das zweite Codewort (17) fünf Bit lang ist und die Stufengröße der Quantisierung bei der Ermittlung von DCT-Koeffizienten angibt.

19. Verfahren nach Anspruch 18, **dadurch gekennzeichnet, daß** die Codeworte (8) ein drittes und ein viertes Codewort (18,19) aufweisen, daß das dritte Codewort (18) ein Bit lang ist und angibt, ob im folgenden vierten Codewort (19), das acht Bit lang ist, zusätzliche Informationen über die Bildquellcodierung abgelegt sind.

20. Verfahren nach einem der Ansprüche 11 bis 19, **dadurch gekennzeichnet, daß** die quellcodierten Bilddaten Bewegungsvektor, Blockposition, DCT-Koeffizient, Quantiserungsstufe in verschiedene Klassen eingeteilt werden.

21. Verfahren nach Anspruch 13, **dadurch gekennzeichnet, daß** als eine Klasse die Bewegungsvektoren, als eine weitere Klasse die DCT-Koeffizienten, die Transformationskoeffizienten der variablen zweidimensionalen Längencodierung und zwei Bits zur Kennzeichnung des Endes eines Blockes und weitere Klasse eine Angabe über die differentielle Quantisierung (DQUANT) und/oder eine Angabe über die Luminanzblöcke, die in einem Makroblock enthalten sind und codierte Transformationskoeffizienten enthalten (CBPY) und/oder Angaben über die Chrominanzblöcke eines Makroblockes, die codierte Transformationscoeffizienten enthalten und welcher Vorhersagemodus für das Bild oder den Makroblock verwendet wird und welche Quantisierung verwendet wird (CBPCM) und/oder eine Angabe, ob eine Codierung durchgeführt wird (COD), verwendet wird.

22. Verfahren nach einem der Ansprüche 16 bis 21, **dadurch gekennzeichnet, daß** der Codezeiger (13) nicht belegte Codes für zukünftige Klassen aufweist.

23. Verfahren nach einem Ansprüche 1 bis 7 oder 11 bis 22, **dadurch gekennzeichnet, daß** ein ratenkompatibler, punktierter Faltungscoder verwendet wird.

24. Verfahren nach Anspruch 16 bis 23, **dadurch gekennzeichnet, daß** bei einer Klasse mit einer Anzahl an Bilddaten (10), die größer ist als die Zahl, die durch die Längenzahl (14) anzeigbar ist, die Längenzahl (14) den Wert (2¹⁴-1) aufweist und eine weitere Klasse mit einem ersten Informationswort (9) folgt, die weitere Bilddaten (10) der vorhergehenden Klasse enthält.

25. Verfahren nach einem der Ansprüche 11 bis 24, **dadurch gekennzeichnet, daß** die kanalkodierten Bilddaten einem Faltungsinterleaver mit einer ersten Speichermatrix (23) zugeführt werden, daß die erste Speichermatrix (23) eine festgelegte Breite aufweist und zyklisch wiederbeschrieben wird, daß die Daten bitweise in Diagonalen von links oben nach rechts unten eingelesen werden und die aufeinander folgenden Diagonalen um jeweils einen Speicherplatz horizontal versetzt sind, daß zur Übertragung die Daten bitweise aus aufeinander folgenden Zeilen in der Reihenfolge ausgelesen werden, in der die Diagonalen beim Einlesen gegeneinander versetzt wurden.

26. Verfahren nach Anspruch 11, **dadurch gekennzeichnet, daß** die für ein Bild zu übertragenden Datenbits einer festgelegten Anzahl entsprechen, die ein Vielfaches der in eine Diagonale in die erste Speichermatrix (23) einlesbaren Bits entspricht.

27. Verfahren zum Dekodieren von kanalkodierten und quellcodierten digitalen Bilddaten nach einem der Ansprüche 11 bis 26, wobei die Bilddaten einem Kanaldecodierer zugeführt und kanaldekodiert werden, wobei die kanaldecodierten Bilddaten einem Bildquelldecoder zugeführt werden und quelldecodiert werden und anschließend dargestellt werden,
**dadurch gekennzeichnet, daß** aus dem Synchronisationswort (6) durch Korrelationsvergleich die zeitliche Synchronisation abgeleitet wird, daß ein erstes Informationswort (9) mit einem festgelegten Aufbau, mit einer festgelegter Bitlänge und einer festgelegten Kanalkodierung decodiert wird und aus dem ersten Informationswort (9) Informationen über die Art der Klasse der folgenden Bilddaten, die Art des Fehlerschutzes und die Anzahl der zur Klasse gehörenden Bilddaten (10) ermittelt werden, daß nach Auswertung des ersten Informationswortes (9) die zum ersten Informationswort (9) gehörenden Bilddaten (10) unter Verwendung der im ersten Informationswort (9) abgelegten Daten kanaldecodiert werden und anschließend einer Bildquelldecodierung unterzogen werden.

28. Verfahren nach Anspruch 27, **dadurch gekennzeichnet, daß** ein zweites Informationswort (7) mit einem festgelegten Aufbau, mit einer festgelegter Bitlänge und einer festgelegten Kanalkodierung decodiert wird und aus dem zweiten Informationswort (7) Informationen über die Art der Klasse der folgenden Codeworte (8), die Art des Fehlerschutzes und die Anzahl der zu den Codeworten (8) gehörenden Datenbits ermittelt werden, daß nach Auswertung des zweiten Informationswortes (7) die zum zweiten Informationswort (7) gehörenden Codeworte (8) unter Verwendung der im zweiten Informationswort (7) abgelegten Daten kanaldecodiert werden und die Codeworte (8) zur Bildquelldecodierung der Bilddaten (10) verwendet werden.

29. Verfahren nach einem der Ansprüch 27 oder 28, **dadurch gekennzeichnet, daß** die empfangenen Daten einem Faltungsdeinterleaver mit einer zweiten Speichermatrix (24) zugeführt werden, daß die zweite Speichermatrix (24) des Deinterleavers eine vorgegebenen Breite aufweist und zyklisch wiederbeschreiben wird, daß die Daten bitweise in Diagonalen von links unten nach rechts oben eingelesen werden, wobei aufeinanderfolgende Diagonalen um einen Speicherplatz gegeneinander in horizontaler Richtung versetzt sind, daß die Daten anschließend Zeile für Zeile bitweise ausgelesen werden und in dieser Reihenfolge dem Kanaldecoder zugeführt werden.

30. Verfahren nach einem der Ansprüche 27 bis 29, **dadurch gekennzeichnet, daß** als Kanaldecoder ein Viterbidecoder verwendet wird, daß der Viterbi-Decoder nach dem Maximum Likelihood Sequence Estimation Verfahren arbeitet.

31. Verfahren nach Anspruch 30, **dadurch gekennzeichnet, daß** der Viterbi-Decoder eine festgelegte Gedächtnistiefe aufweist, daß nach Erkennen eines Leerbits im ersten oder zweiten Informationswort (9,7) das Gedächtnis des Viterbi-Decoders vom zweiten digitalen Signalprozessor (3) mit Leerbits versorgt wird, ohne weitere Bilddaten zu verarbeiten, daß das erste und/oder zweite Informationswort (9,7) ausgewertet wird, und anschließend die dem ersten oder zweiten Informationswort (9,7) folgenden Daten mit den in dem ersten bzw. zweiten Informationswort (9,7) enthaltenen Informationen kanaldecodiert werden.

## Claims

1. Method for transmitting data, the data being generated by at least one data source (51, 52, 53) and being passed in a data frame (5) to a channel coder and the data being subjected to a channel coding, the data being classified in classes of different sensitivity with regard to their reconstruction in the case of an erroneous transmission, an information word (7, 9) of defined length being created for each class, the information word having details about the type of class, the number of data bits belonging to the class and the code rate with which the class is to be coded, firstly the code rate being read from the information word (7, 9) by the channel coder and the class of data belonging to the information word being channel-coded with the code rate and the information word being channel-coded with a defined code rate.

2. Method according to Claim 1, **characterized in that** information about the data generation and/or data source coding is stored as data of a class in the data frame (5).

3. Method according to Claim 1 or 2, **characterized in that** image data and/or audio data and/or fax data and/or data files are used as different classes.

4. Method according to one of Claims 1 to 3, **characterized in that** the data are subjected to an interleaving method after the channel coding (40), the data being read in in diagonals of a first memory matrix (23) and subsequently being read out row by row.

5. Method according to Claim 4, **characterized in that** the data frame has a defined number of data bits which correspond to the memory locations of an integer number of diagonals of the first memory matrix (23).

6. Method according to one of Claims 1 to 5, **characterized in that** a synchronization of the data transmission with a pseudo-noise sequence with good autocorrelation properties is carried out.

7. Method according to one of Claims 1 to 6, **characterized in that**, in the case of a plurality of information words (7, 9) provided in a data frame (5) at least one of these information words contains, as code information, additional data rather than a code rate.

8. Method for transmitting data according to one of Claims 1 to 6, **characterized in that** the information word (7, 9) is received in a receiver and decoded, **in that** the code rate and the number of data bits of the class belonging to the information word are determined from the information word, **in that** the class is subsequently channel-decoded with the code rate stored in the information word.

9. Method according to Claim 8, **characterized in that** a Viterbi decoder which operates according to the maximum likelihood sequence estimation method is used as the channel decoder.

10. Method according to Claim 8 or 9, **characterized in that** the Viterbi decoder is in a known state after the last data bit of the information word has been read in, **in that** the read-in information word is evaluated by the Viterbi decoder without further data bits of the data frame being read in, by bits which do not change the state of the Viterbi decoder being read in.

11. Method according to one of Claims 1 to 7, **characterized in that** the data used are images which are each classified into macroblocks, **in that** each macroblock is subjected to the source coding, **in that** the source-coded image data of a macroblock are classified into one of a plurality of classes, **in that** the classes differ by virtue of different sensitivity with regard to the reconstruction of the macroblock with errors, occurring during transmission, in the image data, **in that** the image data of the macroblock are provided with a respective first information word (9), **in that** the first information word (9) contains, according to a defined construction, data about the class, the channel coding and the number of image data (10) belonging to the macroblock, **in that** a defined number of code words (8) are additionally added to the image data of an image prior to the channel coding, **in that** the code words (8) contain information about the type of source coding, **in that** the code words are provided with a second information word (7), **in that** the second information word (7) is constructed according to a defined scheme and has data about the class of code words (8), about the type of channel coding and the number of data bits belonging to the code words (8), **in that** the first information word (9) and the second information word (7) are transmitted with predetermined channel codings, **in that** the code words (8) and the image data (10) of each macroblock are transmitted with a predetermined channel coding corresponding to their class, and **in that** a synchronization word (6) is added to the channel-coded data bits of an image.

12. Method according to one of Claims 1 to 7, **characterized in that** the data used are source-coded image data (10) of an image which are classified in classes of different sensitivities with regard to the reconstruction of the image with errors which occur during the transmission of the image data (10), **in that** a first information word (9) is added to each class, **in that** the first information word (9) is constructed according to a predetermined scheme and contains data about the type of class, the channel codings and the number of bits of the associated image data (10), **in that** the first information words (9) are transmitted with defined channel codings and the image data (10) are transmitted with predetermined channel codings in accordance with their classes, a synchronization word (6) being added to the channel-coded image data (10) and first information words (9) of an image.

13. Method according to one of Claims 1 to 7, **characterized in that** the data used are images which are each classified into macroblocks, **in that** each macroblock is subjected to the source coding, **in that** the source-coded image data of each macroblock are. classified into a class, the classes representing different sensibilities with regard to the reconstruction of the macroblock with errors which occur during the transmission of the image data (10), **in that** the image data (10) of the classes are provided with a respective first information word (9), **in that** the first information word (9) is constructed according to a predetermined scheme and contains data about the class, the channel coding and the number of image data (10) belonging to the class, **in that** a defined number of code words (8) are added to the data of an image prior to the channel coding, **in that** the code words (8) contain information about the type of source coding, **in that** the code words are provided with a second information word (7), **in that** the second information word (7) is constructed according to a defined scheme and has data about the class of code words (8), about the type of channel coding and the number of data bits belonging to the code words (8), **in that** the first information word (9) and the second information word (7) are subjected to predetermined channel codings, **in that** the code words (8) and the image data of the classes are subjected to a predetermined channel coding corresponding to their classes, and **in that** a synchronization word (6) is added to the channel-coded data of an image prior to the transmission.

14. Method according to Claims 11 and 13, **characterized in that** one macroblock after the other is transmitted.

15. Method according to one of Claims 11 to 14, **characterized in that** a pseudo-noise data word composed of two Willard code words or two Barker code words is used as the synchronization word (6).

16. Method according to one of Claims 1 to 7 or 11 to 15, **characterized in that** the first and second information words (9, 7) have a first class number (12) having a length of four bits, a code pointer (13) having a length of five bits and a length number (14) having a length of fourteen bits, **in that** the class number (12) specifies the class of the associated code words (8) or the class of the associated image data (10), the code pointer (13) specifies the code rate used for the channel coding, and the length number (14) specifies the number of data bits belonging to the code words (8) or to the classes.

17. Method according to one of Claims 1 to 7 or 11 to 16, **characterized in that** the information word or the first and second information words (9, 7), are terminated with a defined number of zero bits (15) or one bits, **in that** the defined number corresponds to the memory depth of the channel coder used.

18. Method according to either of Claims 11 and 13, **characterized in that** the code words (8) are formed from a first and a second code word (16, 17), **in that** the first code word (16) has a length of three bits and the first bit specifies whether the image data are to be constructed rapidly or slowly, **in that** the second bit of the first code word (16) specifies whether one of two selectable source coding methods has been used, **in that** the third bit of the first code word (16) is used for the information as to whether or not information words are used, **in that** the second code word (17) has a length of five bits and specifies the step size of the quantization in the determination of DCT coefficients.

19. Method according to Claim 18, **characterized in that** the code words (8) have a third and a fourth code word (18, 19), **in that** the third code word (18) has a length of one bit and specifies whether additional information about the image source coding is stored in the subsequent fourth code word (19), which has a length of eight bits.

20. Method according to one of Claims 11 to 19, **characterized in that** the source-coded image data motion vector, block position, DCT coefficient, quantization level are classified into different classes.

21. Method according to Claim 13, **characterized in that** the motion vectors are used as one class, as a further class use is made of the DCT coefficients, the transform coefficients of the variable two-dimensional length coding and two bits for identifying the end of a block and, as a further class, use is made of a detail about the differential quantization (DQUANT) and/or a detail about the luminance blocks which are contained in a macroblock and contain coded transform coefficients (CBPY) and/or details about the chrominance blocks of a macroblock, which contain coded transform coefficients, and which prediction mode is used for the image or the macroblock and which quantization is used (CBPCM) and/or a detail as to whether a coding is carried out (COD).

22. Method according to one of Claims 16 to 21, **characterized in that** the code pointer (13) has non-allocated codes for future classes.

23. Method according to one of Claims 1 to 7 or 11 to 22, **characterized in that** a rate-compatible, punctured convolution coder is used.

24. Method according to Claims 16 to 23, **characterized in that**, in the case of a class with a number of image data (10) which is greater than the number which can be indicated by the length number (14), the length number (14) has the value (2¹⁴-1) and a further class with a first information word (9) follows, which contains further image data (10) of the preceding class.

25. Method according to one of Claims 11 to 24, **characterized in that** the channel-coded image data are fed to a convolution interleaver with a first memory matrix (23), **in that** the first memory matrix (23) has a defined width and is cyclically rewritten, **in that** the data are read in bit by bit in diagonals from top left to bottom right and the successive diagonals are horizontally offset by one memory location in each case, **in that**, for transmission, the data are read out bit by bit from successive rows in the order in which the diagonals were offset relative to one another during the read-in process.

26. Method according to Claim 11, **characterized in that** the data bits to be transmitted for an image correspond to a defined number which corresponds to a multiple of the bits which can be read into a diagonal into the first memory matrix (23).

27. Method for decoding channel-coded and source-coded digital image data according to one of Claims 11 to 26, the image data being fed to a channel decoder and channel-decoded, the channel-decoded image data being fed to an image source decoder and being source-decoded and subsequently being displayed,
**characterized in that** the temporal synchronization is derived from the synchronization word (6) by correlation comparison, **in that** a first information word (9) with a defined construction, with a defined bit length and a defined channel coding is decoded and information about the type of class of the succeeding image data, the type of error protection and the number of image data (10) belonging to the class are determined from the first information word (9), **in that**, after the evaluation of the first information word (9), the image data (10) belonging to the first information word (9) are channel-decoded using the data stored in the first information word (9) and are subsequently subjected to an image source decoding.

28. Method according to Claim 27, **characterized in that** a second information word (7) with a defined construction, with a defined bit length and a defined channel coding is decoded and information about the type of class of the succeeding code words (8), the type of error protection and the number of data bits belonging to the code words (8) are determined from the second information word (7), **in that**, after the evaluation of the second information word (7), the code words (8) belonging to the second information word (7) are channel-decoded using the data stored in the second information word (7) and the code words (8) are used for the image source decoding of the image data (10).

29. Method according to either of Claims 27 or 28, **characterized in that** the received data are fed to a convolution deinterleaver with a second memory matrix (24), **in that** the second memory matrix (24) of the deinterleaver has a predetermined width and is cyclically rewritten, **in that** the data are read in bit by bit in diagonals from bottom left to top right, successive diagonals being offset by one memory location with respect to one another in the horizontal direction, **in that** the data are subsequently read out bit by bit, row by row, and fed to the channel decoder in this order.

30. Method according to one of Claims 27 to 29, **characterized in that** a Viterbi decoder is used as the channel decoder, **in that** the Viterbi decoder operates according to the maximum likelihood sequence estimation method.

31. Method according to Claim 30, **characterized in that** the Viterbi decoder has a defined memory depth, **in that**, after the identification of a dummy bit in the first or second information word (9, 7), the memory of the Viterbi decoder is supplied with dummy bits by the second digital signal processor (3), without further image data being processed, **in that** the first and/or second information word (9, 7) is evaluated, and the data following the first or second information word (9, 7), with the information contained in the first or second information word (9, 7), respectively, are subsequently channel-decoded.

## Revendications

1. Procédé de transmission de données selon lequel les données sont générées par au moins une source de données (51, 52, 53) et sont transmises dans une trame de données (5) vers un codeur canal, les données étant soumises à un codage canal,
les données étant réparties en classes de sensibilité différentes par rapport à leur reconstruction en cas de transmission défectueuse, et
pour chaque classe on établit un mot d'information (7, 9) de longueur fixée,
le mot d'information contient des indications relatives à la nature de la classe, au nombre de bits de données appartenant à la classe et du taux de code avec lequel la classe doit être codée,
et d'abord on extrait le taux de code du mot d'information (7, 9) par le codeur canal et avec ce taux de code on assure le codage canal de la classe de données appartenant au mot d'information, et
on effectue le codage canal du mot d'information avec un taux de code fixé.

2. Procédé selon la revendication 1,
**caractérisé en ce qu'**
on enregistre les informations concernant la génération des données et/ou le codage de la source de données comme données d'une classe dans une trame de données (5).

3. Procédé selon l'une quelconque des revendications 1 ou 2,
**caractérisé en ce que**
comme classes différentes on utilise des données images et/ou des données audio et/ou des données téléfax et/ou les dossiers de donnée.

4. Procédé selon l'une quelconque des revendications 1 à 3,
**caractérisé en ce qu'**
après un codage de canal (40) les données sont soumises à un procédé d'imbrication, les données étant enregistrées dans les diagonales d'une première matrice de mémoire (23) et ensuite elles sont lues, ligne par ligne.

5. Procédé selon la revendication 4,
**caractérisé en ce que**
la trame de données comprend un nombre fixe de bits de données qui correspondent aux emplacements de mémoire d'un nombre entier de diagonales de la première matrice de mémoire (23).

6. Procédé selon l'une quelconque des revendications 1 à 5,
**caractérisé en ce qu'**
on effectue une synchronisation de la transmission de données avec une séquence de pseudo-bruit ayant de bonnes propriétés d'autocorrélation.

7. Procédé selon l'une quelconque des revendications 1 à 6,
**caractérisé en ce que**
pour plusieurs mots d'information (7, 9) prévus dans une trame de données (5), au moins l'un de ces mots d'information, comme information de code ne contient pas de taux de code mais des données supplémentaires.

8. Procédé selon l'une quelconque des revendications 1 à 6,
**caractérisé en ce que**
le mot d'information (7, 9) est reçu par un récepteur pour être décodé et à partir du mot d'information, on détermine le taux de code et le nombre de bits de données de la classe appartenant au mot d'information, et ensuite on décode canal, la classe avec le taux de code enregistré dans le mot d'information.

9. Procédé selon la revendication 8,
**caractérisé en ce que**
comme décodeur canal on utilise un décodeur Viterbi qui travaille selon le procédé d'estimation de séquence de plus grande probabilité.

10. Procédé selon l'une quelconque des revendications 8 ou 9,
**caractérisé en ce que**
le décodeur Viterbi, après l'enregistrement du dernier bit de données du mot d'information est dans un état connu,
on exploite le mot d'information enregistré par le décodeur Viterbi sans enregistrer d'autres bits de données de la trame de données en enregistrant des bits qui ne modifient pas l'état du décodeur Viterbi.

11. Procédé selon l'une quelconque des revendications 1 à 7,
**caractérisé en ce que**
comme données on utilise des images subdivisées chaque fois en macroblocs,
on soumet chaque macrobloc à un codage source,
on subdivise les données d'images à codage source d'un macrobloc en l'une de plusieurs classes,
on distingue les classes par une sensibilité différente par rapport à la reconstruction du macrobloc ayant des erreurs produites à la transmission dans les données d'images,
on munit les données d'images du macrobloc chaque fois d'un premier mot d'information (9),
le premier mot d'information (9) une fois la construction fixée contient des données concernant la classe, le codage canal et le nombre de données d'images (10) appartenant à un macrobloc,
en plus on ajoute un nombre fixe de mots de code (8) avant le codage canal des données images d'une image,
le mot de code (8) contient des informations concernant la nature du codage source,
on munit le mot de code d'un second mot d'information (7),
le second mot d'information (7) est construit selon un schéma fixe et contient des données concernant la classe des mots de code (8), la nature du codage canal et le nombre de bits de données faisant partie du mot de code (8),
le premier mot d'information (9) et le second mot d'information (7) étant transmis avec un codage canal prédéterminé,
le mode de code (8) et les données d'images (10) de chaque macrobloc sont transmises avec un codage canal prédéterminé correspondant à leur classe, et
on ajoute un mot de synchronisation (6) aux bits de données à codage canal d'une image.

12. Procédé selon l'une quelconque des revendications 1 à 7,
**caractérisé en ce que**
comme données on utilise les données d'images (10) à codage source d'une image qui sont réparties en classes de sensibilité différentes par rapport à la reconstruction de l'image avec les erreurs produites lors de la transmission des données d'images (10),
à chaque classe on ajoute un premier mot d'information (9),
le premier mot d'information (9) est construit selon un schéma prédéterminé et il contient les données concernant la nature de la classe, le codage canal et le nombre de bits de données d'images correspondantes (10),
les premiers mots d'information (9) sont transmis avec un codage canal fixe et les données d'images (10) avec un codage canal prédéterminé correspondant à leur classe,
et un mot de synchronisation (6) est ajouté aux données d'images à codage canal (10) et au premier mot d'information (9) d'une image.

13. Procédé selon l'une quelconque des revendications 1 à 7,
**caractérisé en ce que**
comme données on utilise des images subdivisées chaque fois en macroblocs,
chaque macrobloc est soumis à un codage source,
les données images à codage source de chaque macrobloc sont subdivisées en une classe, les classes représentant des sensibilités différentes par rapport à la reconstruction du macrobloc ayant les erreurs produites lors de la transmission des données d'images (10),
les données d'images (10) des classes reçoivent chaque fois un premier mot d'information (9),
le premier mot d'information (9) est construit selon un schéma prédéterminé et les données relatives à la classe, au codage canal et au nombre de données d'images (10) appartenant à la classe,
un nombre fixe de mots de code (8) étant ajouté avant le codage canal aux données d'une image,
les mots de code (8) contiennent des informations relatives à la nature du codage source,
les mots de code reçoivent un second mot d'information (7),
le second mot d'information (7) est construit selon un schéma fixé et contient les données concernant la classe des mots de code (8), la nature du codage canal et le nombre de bits de données faisant partie des mots de code (8), et le premier mot d'information (9) et le second mot d'information (7) sont soumis à un codage canal,
les mots de code (8) et les données d'images des classes sont soumises à un codage canal prédéterminé correspondant à leur classe, et
aux données codées canal on ajoute un mot de synchronisation (6) aux données d'une image avant de la transmettre.

14. Procédé selon l'une quelconque des revendications 11 et 13,
**caractérisé en ce qu'**
on transmet un macrobloc après l'autre.

15. Procédé selon l'une quelconque des revendications 1 à 14,
**caractérisé en ce que**
le mot de synchronisation (6) utilisé est un mot de données de pseudo-bruit composé de deux mots de code Willard ou de deux mots de code Barker.

16. Procédé selon l'une quelconque des revendications 1 à 7 ou 11 à 15,
**caractérisé en ce que**
le premier et le second mot d'information (7, 9) présentent un premier numéro de classe (12) d'une longueur de quatre bits, un index de code (13) d'une longueur de cinq bits et un nombre de longueur (14), de quatorze bits
le numéro de classe (12) indique la classe du mot de code (8) correspondant ou la classe des données d'images (10) correspondantes, l'index de code (13) indique la vitesse de codage utilisée pour le codage de canal et le nombre de longueurs (14) indique le nombre de bits de données faisant partie des mots de code (8) ou des classes.

17. Procédé selon l'une quelconque des revendications 1 à 7 ou 11 à 16,
**caractérisé en ce que**
le mot d'information ou le premier et le second mot d'information (9, 7) sont terminés par un nombre fixé de bits zéro (15) ou de bits unitaires qui correspondent au nombre fixé de la profondeur de la mémoire du codeur canal utilisé.

18. Procédé selon l'une quelconque des revendications 11 à 13,
**caractérisé en ce que**
les mots de code (8) sont formés d'un premier et d'un second mot de code (16, 17), le premier mot de code (16) a une longueur de trois bits et
le premier bit indique si les données d'images doivent être construites rapidement ou lentement,
le second bit du premier mot de code (16) indique si l'un des deux procédés de codage source sélectionnable a été utilisé,
le troisième bit du premier mot de code (16) est utilisé pour les informations, c'est-à-dire si des mots d'information sont ou non utilisés, le second mot de code (17) a une longueur de cinq bits et indique le niveau d'échelle de quantification lorsqu'on détermine les coefficients DCT.

19. Procédé selon la revendication 18,
**caractérisé en ce que**
les mots de code (8) comprennent un troisième et un quatrième mot de code (18, 19), le troisième mot de code (18) a une longueur de un bit et indique si dans le quatrième mot de code (19) suivant, long de huit bits, se trouvent enregistrées des informations supplémentaires concernant le codage de la source image.

20. Procédé selon l'une quelconque des revendications 11 à 19,
**caractérisé en ce que**
les données d'images à codage source, les vecteurs de mouvement, la position de bloc, le coefficient DCT, le niveau de quantification sont répartis en différentes classes.

21. Procédé selon la revendication 13,
**caractérisé en ce que**
comme une classe on a les vecteurs de mouvement, comme autre classe, les coefficients DCT, les coefficients de transformation du codage de longueur à deux dimensions, variables et deux bits pour caractériser la fin d'un bloc et comme autre classe, une indication relative à la quantification différentielle (DQUANT) et/ou une indication concernant les blocs de luminance, blocs qui sont contenus dans un macrobloc et qui contiennent des coefficients de transformation codés (CBPY) et/ou des indications concernant les blocs de chrominance d'un macrobloca, avec les coefficients de transformation codés et le module de prévision qui est utilisé pour l'image ou le macrobloc et la quantification utilisée (CBPCM), et/ou une indication si un codage doit être effectué (COD).

22. Procédé selon l'une quelconque des revendications 16 à 21,
**caractérisé en ce que**
l'index de code (13) comporte des codes non occupés pour les classes futures.

23. Procédé selon l'une quelconque des revendications 1 à 7 ou 11 à 22,
**caractérisé par**
l'utilisation d'un code de convolution, ponctué, compatible avec le taux.

24. Procédé selon l'une quelconque des revendications 16 à 23,
**caractérisé en ce que**
pour une classe avec un nombre de données d'images (10) supérieur au nombre que peut indiquer le nombre de longueurs (14), ce nombre de longueurs (14) est à la valeur (2¹⁴-1) et une autre classe suit avec un premier mot d'information (9) qui contient les autres données d'images (10) de la classe précédente.

25. Procédé selon l'une quelconque des revendications 1 à 24,
**caractérisé en ce que**
les données d'images à codage canal sont appliquées à un moyen d'imbrication à convolution avec une première matrice de mémoire (23),
la première matrice de mémoire (23) présente une largeur fixe et est réinscrite de manière cyclique,
les données sont enregistrées bit par bit dans les diagonales de la gauche en haut vers la droite en bas et les diagonales qui se suivent sont décalées chaque fois horizontalement d'un emplacement de mémoire, et
pour la transmission des données bit par bit à partir des lignes successives on effectue une lecture dans l'ordre des lignes dans lesquelles les diagonales sont décalées les unes par rapport aux autres pour la lecture.

26. Procédé selon la revendication 11,
**caractérisé en ce que**
les bits de données transmis pour une image correspondent à un nombre fixe qui est un multiple des bits susceptibles d'être enregistrés dans une diagonale dans la première matrice de mémoire (23).

27. Procédé de décodage de données d'images numériques à codage canal et à codage source selon l'une quelconque des revendications 1 à 26, selon lequel on fournit les données d'images à un décodeur canal et on assure le décodage canal,
les données d'images résultant du décodage canal sont appliquées à un décodeur source d'image pour être décodées en source et ensuite être représentées,
**caractérisé en ce qu'**
à partir du mot de synchronisation (6), par comparaison de corrélation, on déduit la synchronisation dans le temps,
on décode un premier mot d'information (9) de construction fixée ayant une longueur de bit fixée et un codage canal fixé et à partir du premier mot d'information (9) on détermine des informations concernant la nature de la classe des données d'images suivantes, la nature de la protection contre les défauts et la nature des données d'images (10) appartenant à la classe,
après exploitation du premier mot d'information (9) on effectue le décodage canal des données d'images (10) appartenant au premier mot d'information (9) en utilisant les données contenues dans le premier mot d'information (9) et ensuite on les soumet à un décodage de source d'image.

28. Procédé selon la revendication 27,
**caractérisé en ce qu'**
on décode un second mot d'information (9) de construction fixée avec une longueur de bit fixée et un codage canal fixé et à partir du second mot d'information (7) on détermine les informations concernant la nature de la classe du mot de code suivant (8), la nature de la protection de défaut et le nombre des bits de données appartenant au mot de code (8) et après exploitation du second mot d'information (7) on effectue un décodage canal des mots de code (8) appartenant au second mot d'information (7) en utilisant les données enregistrées dans le second mot d'information (7) et on utilise les mots de code (8) pour le décodage de source d'images des données d'images (10).

29. Procédé selon l'une quelconque des revendications 27 ou 28
**caractérisé en ce qu'**
on applique les données reçues à un désimbricateur de convolution avec une seconde matrice de mémoire (24),
la seconde matrice de mémoire (24) du désimbricateur présente une largeur prédéterminée et est réinscrite cycliquement,
des données sont enregistrées bit par bit dans les diagonales de la gauche en bas à la droite en haut,
les diagonales successives sont décalées d'un emplacement de mémoire par rapport à la direction horizontale,
les données de lignes adjacentes sont extraites bit par bit ensuite ligne par ligne et sont appliquées dans cet ordre au décodeur canal.

30. Procédé selon l'une quelconque des revendications 27 à 29,
**caractérisé en ce que**
comme décodeur canal on utilise un décodeur Viterbi et ce décodeur Viterbi fonctionne selon le procédé d'estimation séquentiel à probabilité maximale .

31. Procédé selon la revendication 30,
**caractérisé en ce que**
le décodeur Viterbi a une profondeur de mémoire fixée,
après avoir reconnu un bit vide dans le premier ou le second mot d'information (9, 7), on alimente la mémoire du décodeur Viterbi avec le second processeur de signal numérique (3), avec des bits vides, sans traiter d'autres données d'images,
on exploite le premier et/ou le second mot d'information (9, 7) et ensuite on effectue un décodage canal des données qui suivent le premier ou le second mot d'information (9, 7) avec les informations contenues dans le premier ou le second mot d'information (9, 7).
